# EUROPEAN PATENT APPLICATION

(11) **EP 4 772 488 A1**
(43) Date of publication of application: **08.07.2026**
(21) Application number: 24877170.1
(22) Date of filing: 08.10.2024
(51) Int. Cl.: C04B 35/101, C04B 35/185, C04B 35/443, F27D 1/00

(54) **METHOD FOR MANUFACTURING NON-FIRED BRICK**

(30) Priority: 12.10.2023 JP 2023177040
(71) Applicant: Krosakiharima Corporation, Kitakyushu-shi, Fukuoka 806-8586 (JP)
(72) Inventor: KAWANO, Hayate, Kitakyushu-shi, Fukuoka 806-8586 (JP)
(74) Representative: Vossius & Partner Patentanwälte Rechtsanwälte mbB
(86) International application number: PCT/JP2024/035934
(87) International publication number: WO 2025/079575

(57) **Abstract**

Provided is a manufacturing method for an unfired brick capable of suppressing deterioration in corrosion resistance and creep resistance due to the formation of low-melting-point substances and exhibiting sufficient strength. The manufacturing method comprises: adding water to a refractory raw material mixture that contains 0.2% by mass to 15% by mass of magnesia having a particle size of less than 75 µm, and 0.3% by mass to 10% by mass of silica having a particle size of less than 44 µm, with the remainder mainly containing one or more selected from the group consisting of an alumina raw material, an alumina-silica raw material, a silica raw material, and a spinel raw material, wherein a total content rate of alkali metal phosphate and alkali metal silicate is less than 1% by mass (including zero); and subjecting the resulting mixture to kneading and press-molding, and then to standing at normal temperature or heat treatment at a temperature of 1000°C or less.

## Description

### TECHNICAL FIELD

The present invention relates to a method for manufacturing an unfired brick used in a coke oven, a blast furnace, a hot blast stove, a CDQ (Coke Dry Quenching), a molten steel ladle, a molten iron ladle, a secondary refining furnace, or the like.

### BACKGROUND ART

In a coke oven, a blast furnace, a hot blast stove, a CDQ, a molten steel ladle, a molten iron ladle, a secondary refining furnace, or the like, a fired brick consisting primarily of an Al₂O₃ component and/or an SiO₂ component as a chemical composition (hereinafter referred to as "Al₂O₃/SiO₂-based fired brick") is used. Examples thereof include an alumina-based brick, an alumina-silica-based brick, a clay-based brick, a silica brick, an alumina-magnesia based brick, an alumina-spinel based brick, and a spinel brick.

These bricks are generally manufactured by kneading a refractory raw material mixture containing one or more of an alumina raw material, an alumina-silica raw material, a silica raw material, and a spinel raw material, and then subjecting the resulting kneaded mixture to pressure molding using a molding machine and firing at a high temperature (for example, Patent Documents 1 to 3). However, such an Al₂O₃/SiO₂-based fired brick manufacturing method involves problems such as CO₂ gas emissions and high energy cost, due to long hours of firing at a high temperature.

For this reason, conversion from Al₂O₃/SiO₂-based fired bricks to Al₂O₃/SiO₂-based unfired bricks has heretofore been studied. For example, in Patent Document 4, a silica-based precast block is manufactured by casting a castable refractory material mainly made of fused silica, and drying the resulting molded body after removal of a molding frame. However, such a precast block manufacturing method based on casting involves a problem of poor molding efficiency because after casting a castable refractory material into the molding frame, it is necessary to take 12 to 24 hours before removal of the molding frame.

Further, as for alumina-based bricks and alumina-silica-based bricks, there is known an unfired brick prepared by using alkali metal silicate or alkali metal phosphate as a binder. For example, Patent Document 5 discloses an unfired brick manufacturing method using an alumina raw material and a magnesia raw material containing 90 % by mass or more of a fine powder having a particle size of 0.5 mm or less, and using sodium silicate and potassium silicate as a binder. However, when sodium silicate or potassium silicate is used as a binder as in Patent Document 5, the alkali metal oxide in the binder is likely to form low-melting-point substances through reactions with other refractory raw materials, leading to a problem of deterioration in corrosion resistance and creep resistance. Moreover, when alkali metal phosphate is used as the binder, there is a concern about elution of a phosphorus component into molten steel. Thus, the use of phosphate is undesirable.

On the other hand, Patent Document 6 discloses an alumina-based unfired brick in which phosphate is added in an amount of 0.3 % by mass as a binder. However, this unfired brick involves a problem that sufficient strength cannot be obtained due to an excessively small amount of phosphate.

### PRIOR ART DOCUMENTS

### [Patent Document]

Patent Document 1: JP S53-13642 B
Patent Document 2: JP2017-65956 A
Patent Document 3: JP2016-64956 A
Patent Document 4: JP6823042 B
Patent Document 5: JP2007-145684 A
Patent Document 6: JPH8-109062 A

### SUMMARY OF INVENTION

### [Technical Problem]

The technical problem to be solved by the present invention is to provide a manufacturing method for an unfired brick capable of suppressing deterioration in corrosion resistance and creep resistance due to the formation of low-melting-point substances, and exhibiting sufficient strength.

### [Solution to Technical Problem]

According to one aspect of the present invention, the following method is provided.

"A method for manufacturing an unfired brick, the method comprising: adding water to a refractory raw material mixture that contains 0.2% by mass to 15% by mass of magnesia having a particle size of less than 75 µm, and 0.3% by mass to 10% by mass of silica having a particle size of less than 44 µm, with the remainder mainly containing one or more selected from the group consisting of an alumina raw material, an alumina-silica raw material, a silica raw material, and a spinel raw material, wherein a total content rate of alkali metal phosphate and alkali metal silicate is less than 1% by mass (including zero); and subjecting the resulting mixture to kneading and press-molding, and then to standing at normal temperature or heat treatment at a temperature of 1000°C or less."

According to another aspect of the present invention, the following method is provided.

"A method for manufacturing an unfired brick, the method comprising: adding water to a refractory raw material mixture that contains 0.2% by mass to 5% by mass of magnesia having a particle size of less than 75 µm, 10% by mass or less (not including zero) of magnesia having a particle size of 75 µm or more, and 0.3% by mass to 10% by mass of silica having a particle size of less than 44 µm, with the remainder mainly containing an alumina raw material, wherein a total content rate of alkali metal phosphate and alkali metal silicate is less than 1% by mass (including zero); and subjecting the resulting mixture to kneading and press-molding, and then to standing at normal temperature or heat treatment at a temperature of 1000°C or less."

### [Advantageous Effects of Invention]

In the manufacturing method according to the present invention, since magnesium silicate hydrate is formed as a binder, although the details will be described later, it becomes possible to obtain an unfired brick capable of suppressing deterioration in corrosion resistance and creep resistance due to the formation of low-melting-point substances, and exhibiting sufficient strength.

### DESCRIPTION OF EMBODIMENTS

The present inventor has found that an unfired basic brick having sufficient corrosion resistance and creep resistance and sufficient strength can be obtained by: adding water to a refractory raw material mixture containing a magnesia fine powder and a silica fine powder; and subjecting the resulting mixture to kneading and press-molding, and then to standing at normal temperature or heat treatment at a temperature of 1000°C or less.

The mechanism is considered as follows. A magnesia fine powder and a silica fine powder form gel-like magnesium silicate hydrate in the presence of water. Thus, when the water content of a brick decreases even by standing (i.e., being left) at normal temperature, the magnesium silicate hydrate functions as a binder in a matrix part of the brick. Subsequently, even when the magnesium silicate hydrate is dehydrated due to a rise in the temperature of the brick caused by heat treatment, the strength of the brick is maintained because magnesium silicate having an amorphous bond network is formed. When the brick is further subjected to heat, the amorphous magnesium silicate is transformed into forsterite, so that it is possible to suppress deterioration in strength over a temperature range up to a use temperature of the brick. Further, forsterite has a high melting point, and is stable without forming low-melting-point substances through reactions with other raw materials during use. Thus, it almost never exerts an adverse influence on creep resistance and corrosion resistance.

In one aspect of the present invention, as a magnesia component for forming magnesium silicate hydrate, a magnesia fine powder is used at a content rate of 0.2% by mass to 15% by mass, with respect to 100% by mass of the refractory raw material mixture. In view of the fact that as the particle size of the magnesia fine powder becomes smaller, it becomes easier to form hydrate in the presence of water, a specific value of the particle size thereof to be used is less than 75 µm. That is, in one aspect of the present invention, the refractory raw material mixture contains a magnesia fine powder, which is magnesia having a particle size of less than 75 µm, at a rate of 0.2% by mass to 15% by mass. If the content rate of the magnesia fine powder is less than 0.2% by mass, a binding microstructure in the brick microstructure becomes insufficient, leading to poor strength. On the other hand, if the content rate exceeds 15% by mass, the amount of reaction products (secondary spinel, enstatite, etc.) and/or low-melting-point substances (cordierite, etc.) each having a different volume from that of the surrounding raw materials increases, which gives rise to a problem of deterioration in creep resistance in alumina-silica-based and silica-based bricks, and a problem that cracking during use due to an increase in residual expansion is more likely to occur in alumina-based and spinel-based bricks.

As just described, as the content rate of the magnesia fine powder increases, the residual expansion increases, for example, in an alumina-based brick. On the other hand, the magnesia raw material is a refractory raw material effective for ensuring corrosion resistance. Therefore, in another aspect of the present invention, from a viewpoint of reducing the residual expansion and further improving volume stability, the upper limit of the content rate of the magnesia fine powder is reduced to 5% by mass, and from a viewpoint of ensuring corrosion resistance, magnesia having a particle diameter of 75 µm or more is contained at a content rate of 10% by mass or less (not including zero).

In the present invention, light-fired magnesia (i.e., light-burned magnesia) may be used as the magnesia fine powder. The light-fired magnesia is obtained by firing magnesite, magnesium hydroxide, or the like at a relatively low temperature of, e.g., 1400°C or less, typically 1000 to 1400°C. Generally, it is also referred to as "active magnesia" or "calcined magnesia", wherein it has an average particle size of 1 µm or less. Since this light-fired magnesia has a large specific surface area and is highly active, it is easily dissolved in water as compared with sintered magnesia or electrofused magnesia. Thus, the bond network of magnesium silicate is well developed in the brick microstructure, so that it is possible to increase the strength of the brick. This light-fired magnesia may be used at a content rate of 0.2% by mass to 5% by mass, with respect to 100% by mass of the refractory raw material mixture.

Further, in the present invention, as a silica component for forming magnesium silicate hydrate, a silica fine powder, which is silica having a particle size of less than 44 µm, is used at a content rate of 0.3% by mass to 10% by mass, with respect to 100% by mass of the refractory raw material mixture. If the content rate of the silica fine powder is less than 0.3% by mass, the binding strength of the brick microstructure becomes insufficient. On the other hand, if the content rate exceeds 10% by mass, corrosion resistance and/or creep resistance deteriorate.

As the silica fine powder, it is possible to employ silica flour, fused silica, silica sol, silica brick scrap, a fine powder of silica stone, or the like. It should be noted here that since the silica sol is in liquid form, the content rate thereof is a value converted to SiO₂. Further, when silica flour is employed, since it has high reactivity, the content rate thereof may be set in the range of 0.3% by mass to 2.5% by mass.

Further, in the present invention, the silica flour is fine-particle silica having an average particle size of 10 µm or less, and refers collectively to silica fume, fumed silica, and white carbon. The silica fume is a by-product obtained by collecting exhaust gas generated in a refining process of ferrosilicon, metal silicon, electrofused zirconia, or the like, and is available relatively inexpensively. The fumed silica is produced by hydrolyzing a silicon compound such as silicon tetrachloride as a raw material, in a flame of oxygen and hydrogen. The white carbon is obtained by decomposition of sodium silicate using acid or alkali. Since these silica flours are easily dissolved in alkaline water in which the magnesia fine powder is partially dissolved, the bond network of magnesium silicate is well developed in the brick microstructure, so that it is possible to increase the strength of the brick.

In one aspect of the present invention, a raw material composition other than the magnesia fine powder and the silica fine powder contained in the refractory raw material mixture, i.e., a raw material composition of the remainder of the refractory raw material mixture is mainly one or more selected from the group consisting of an alumina raw material, an alumina-silica raw material, a silica raw material, and a spinel raw material. On the other hand, in another aspect of the present invention, a raw material composition other than the magnesia fine powder, the magnesia powder having a particle size of 75 µm or more, and the silica fine powder contained in the refractory raw material mixture, i.e., a raw material composition of the remainder of the refractory raw material mixture is mainly an alumina raw material.

As the alumina raw material, one or more of electrofused alumina, sintered alumina, calcined alumina, bauxite, and fired alum shale may be used.

As the alumina-silica raw material, one or more of mullite, sillimanite, andalusite, kyanite, roseki (pyrophyllite, etc.), chamotte, and clay may be used.

As the silica raw material, one or more of fused silica and silica stone may be used.

As the spinel raw material, a spinel raw material in which the content rate of Al₂O₃ is 60 to 90% by mass, the content rate of MgO is 10 to 40% by mass, and the total content rate of Al₂O₃ and MgO is 95% by mass or more may be used.

In one aspect of the present invention, the remainder of the refractory raw material mixture may further contain, as a refractory raw material other than the above-mentioned alumina raw material, alumina-silica raw material, silica raw material, and spinel raw material, one or more selected from the group consisting of metal powder, silicon carbide, graphite, pitch, carbon black, zirconia, glass powder, zirconia, zircon, and boron carbide, at a content rate of 5% by mass or less, with respect to 100% by mass of the refractory raw material mixture. As just described, in one aspect of the present invention, the raw material composition other than the magnesia fine powder and the silica fine powder, contained in the refractory raw material mixture, i.e., the raw material composition of the remainder of the refractory raw material mixture, consists primarily of one or more selected from the group consisting of an alumina raw material, an alumina-silica raw material, a silica raw material, and a spinel raw material, as a matter of principle. Therefore, the unfired brick according to the present invention is an unfired brick consisting primarily of an Al₂O₃ component and/or a SiO₂ component as chemical components. On the other hand, in another aspect of the present invention, the remainder of the refractory raw material mixture may contain, as a refractory raw material other than the above-mentioned alumina raw material, one or more selected from the group consisting of metal powder, silicon carbide, graphite, pitch, carbon black, zirconia, glass powder, zircon, and boron carbide, at a content rate of 5% by mass or less, with respect to 100% by mass of the refractory raw material mixture. As just described, in another aspect of the present invention, the raw material composition other than the magnesia fine powder, the magnesia having a particle size of 75 µm or more, and the silica fine powder, contained in the refractory raw material mixture, i.e., the raw material composition of the remainder of the refractory raw material mixture, consists primarily of an alumina raw material, as a matter of principle. Therefore, the unfired brick according to the present invention is an unfired brick consisting primarily of an Al₂O₃ component as a main chemical component.

In the present invention, hydrated magnesium silicate functions as a binder. Thus, unlike conventional unfired bricks, alkali metal phosphate and alkali metal silicate need not be contained as a binder, and therefore need not be used. However, they may be used supplementarily. In such a case, the total content rate of alkali metal phosphate and alkali metal silicate is set to be less than 1% by mass, preferably less than 0.2% by mass. If the total content rate thereof is 1% by mass or more, corrosion resistance and creep resistance deteriorate. Further, as for alkali metal phosphates, there is a concern about elution of phosphate components into molten steel. Here, examples of the alkali metal silicate include sodium silicate, and potassium silicate, and examples of the alkali metal phosphates include sodium phosphate, and potassium phosphate.

Further, in the present invention, although sufficient strength can be basically obtained without using other binders, it is also possible to use other binders in combination. That is, in the present invention, any binder commonly used for refractory bricks may also be used in combination. However, the total content rate of them is preferably 1.5% by mass or less, and more preferably less than 1% by mass.

In the unfired brick manufacturing method according to the present invention, water is added to the above-mentioned refractory raw material mixture, and the resulting mixture is subjected to kneading and press-molding.

Water may be added in an appropriate amount depending on the raw material composition and the like, to form a magnesium silicate hydrate serving as a binder and to ensure moldability of the mixture. Specifically, water may be added at an addition rate of 0.5% by mass to 8% by mass, with respect to 100% by mass of the refractory raw material mixture. At this time, an organic solvent having compatibility with water, such as ethylene glycol, or methanol, may be used in combination with water.

After press-molding, magnesium silicate hydrate is formed, and thus handling strength becomes sufficient by removing water to some extent. Therefore, sufficient strength for handling the brick can be obtained even by leaving the brick to stand at normal temperature. The term "normal temperature" here means the ambient temperature inside a brick manufacturing plant, and specifically means a temperature of 25°C to less than 60°C. A leaving time may be adjusted depending on the size and the temperature of the brick, and may be set in the range of 12 hours to 120 hours.

Further, depending on the intended use or use conditions (such as preheating temperature or time) of the brick, e.g., when the temperature inside the plant is less than 25°C, or when it is desired to complete a product quickly, heat treatment may be performed by selecting an appropriate temperature condition within a temperature range of 60°C to 1000°C.

Here, the term "particle size" in the present invention means a sieve mesh size when refractory raw material particles are screened and separated by a sieve. For example, magnesia having a particle size of less than 75 µm means magnesia which can pass through a sieve having a mesh size of 75 µm, and magnesia having a particle size of 75 µm or more means magnesia which cannot pass through the sieve having a mesh size of 75 µm.

Further, the term "average particle size" in the present invention means a volume average particle size corresponding to a median cumulative value (D50) of a cumulative curve measured by a laser diffraction scattering particle size distribution meter.

### EXAMPLES

Tables 1 to 4 show the compositions of the refractory raw material mixtures and the evaluation results of the obtained bricks in the Inventive Examples and Comparative Examples. Four groups of bricks, which are different in terms of material type, are shown in Tables 1 to 4, respectively. Specifically, Table 1 and Table 2 show alumina-silica-based unfired bricks and silica-based unfired bricks, respectively, and Table 3 and Table 4 show spinel-based unfired bricks, and alumina-based unfired bricks, respectively.

The refractory raw materials used in Tables 1 to 4 will be first described.

As the alumina raw material, electrofused alumina, sintered alumina, and calcined alumina each comprising Al₂O₃ at a content rate of 98% by mass or more were used.

As the alumina-silica raw material, andalusite comprising Al₂O₃ at a content rate of 60% by mass and SiO₂ at a content rate of 37% by mass, sintered mullite comprising Al₂O₃ at a content rate of 71% by mass and SiO₂ at a content rate of 27% by mass, chamotte comprising Al₂O₃ at a content rate of 33% by mass and SiO₂ at a content rate of 64% by mass, and clay comprising Al₂O₃ at a content rate of 40% by mass and SiO₂ at a content rate of 45% by mass, were used.

As the silica raw material, fused silica comprising SiO₂ at a content rate of 99% by mass, and silica stone comprising SiO₂ at a content rate of 98% by mass, were used.

As the spinel raw material, electrofused spinel comprising MgO at a content rate of 22% by mass and Al₂O₃ at a content rate of 73% by mass was used.

As the magnesia fine powder, i.e., magnesia having a particle size of less than 75 µm, sintered magnesia comprising MgO at a content rate of 98% by mass or more, and light-fired magnesia comprising MgO at a content rate of 98% by mass or more, were used. On the other hand, as magnesia having a particle size of 75 µm or more, electrofused magnesia comprising MgO at a content rate of 98% by mass or more was used.

As the silica fine powder, silica stone having a particle size of less than 44 µm, and silica flour comprising SiO₂ at a content rate of 98% by mass, were used.

As the alkali metal phosphate, sodium phosphate used was sodium metaphosphate comprising P₂O₅ at a content rate of 65% by mass.

As the alkali metal silicate, sodium silicate used was sodium metasilicate comprising Na₂O at a content rate of 30% by mass.

An unfired brick was prepared by: adding water to each refractory raw material mixture in Inventive and Comparative Examples listed in Tables 1 to 4, at an addition rate of 3% by mass; kneading the resulting mixture; molding the kneaded mixture into a shape of 230 × 114 × 100 mm by oil press; and then subjecting the resulting molded body to heat treatment at 250°C for a holding time of 5 hours. Further, in some of the Inventive Examples, unfired bricks were prepared under the condition that they were left to stand at normal temperature (stand at 25°C for 120 hours) and were subjected to heat treatment at different temperatures. Samples for physical property measurements were cut out from these bricks, and subjected to measurement of modulus of rupture at normal temperature, and some of the samples that had been heat-treated at 250°C were evaluated in terms of corrosion resistance, residual expansion property, and creep resistance.

The modulus of rupture at normal temperature was measured by three-point bending. Specifically, a reed-shaped (rectangular-shaped) sample having a size of 20 × 20 × 80 mm was prepared, and subjected to measurement of the modulus of rupture under a span of 50 mm and at a pressing speed of 1.65 kN/s.

The evaluation of the corrosion resistance was performed with respect to spinel-based bricks and alumina-based bricks on the assumption of use as a lining material for molten metal containers. Further, the evaluation of the residual expansion property was also performed with respect to spinel-based materials and alumina-based bricks. On the other hand, since alumina-silica-based bricks and silica-based bricks are often used under the condition that they do not come into contact with molten iron or molten steel, a refractoriness-under-load (RUL) test was performed as the evaluation of the creep resistance.

The corrosion resistance was evaluated by a rotation corrosion test. In the rotation corrosion test, the inner surface of a drum having a horizontal rotation axis was lined with a brick under test, and slag was charged into the drum and heated, thereby causing corrosion of the surface of the brick. An oxygen-propane burner was used as a heating source, and a test temperature was set to 1700°C. Further, the slag had a composition of CaO: 30% by mass, SiO₂: 30% by mass, Al₂O₃: 20% by mass, and FeO + Fe₂O₃: 20% by mass, and the discharge and charge of the slag were repeated ten times every 30 minutes. After completion of the test, a corrosion amount (mm) was obtained from the difference (mm) between thicknesses before and after the test at the maximum worn area of each brick. Then, a wear index on the basis of the corrosion amount (mm) of "Comparative Example 11" listed in Table 3 being taken as 100 was obtained. A smaller value of this wear index indicates better corrosion resistance.

The evaluation of the residual expansion property was performed by: preparing a reed-shaped sample having a size of 20 × 20 × 80 mm; subjecting the sample to heat treatment at 1400°C for 5 hours in an atmospheric atmosphere; and then comparing the longitudinal dimension of the sample before and after heat treatment. More specifically, the rate of change in the longitudinal dimension of the sample after the heat treatment relative to that before the heat treatment, i.e., "dimensional change rate", was measured, wherein: when the measured dimensional change rate was less than 0.5%, the residual expansion property was evaluated as ∘ (Good); when the measured dimensional change rate was 0.5% to less than 1.0%, the residual expansion property was evaluated as △ (Acceptable); when the measured dimensional change rate was 1.0% or more, the residual expansion property was rated as × (NG).

The creep resistance was evaluated by measuring a refractoriness-under-load temperature. The refractoriness-under-load temperature was measured in accordance with JIS R 2209 under a load condition of 0.2 MPa. More specifically, a difference in terms of the 2% refractoriness-under-load temperature (T2) between a brick of each of Inventive Examples and Comparative Examples and a brick of one Inventive Example serving as a reference was measured, wherein: when the measured difference was less than 100°C, the creep resistance was evaluated as ∘ (Good); when the measured difference was 100°C to less than 200°C, the creep resistance was evaluated as △ (Acceptable); and when the measured difference was 200°C or more, the creep resistance was evaluated as × (NG). Here, Inventive Examples 1 to 7 and Comparative Examples 1 to 3 were evaluated using Inventive Example 1 as a reference, and Inventive Examples 8 to 12 and Comparative Examples 4 to 5 were evaluated using Inventive Example 8 as a reference. Further, Inventive Examples 13 to 20 and Comparative Examples 6 to 8 were evaluated using Inventive Example 13 as a reference, and Inventive Examples 21 to 25 and Comparative Examples 9 to 10 were evaluated using Inventive Example 21 as a reference.

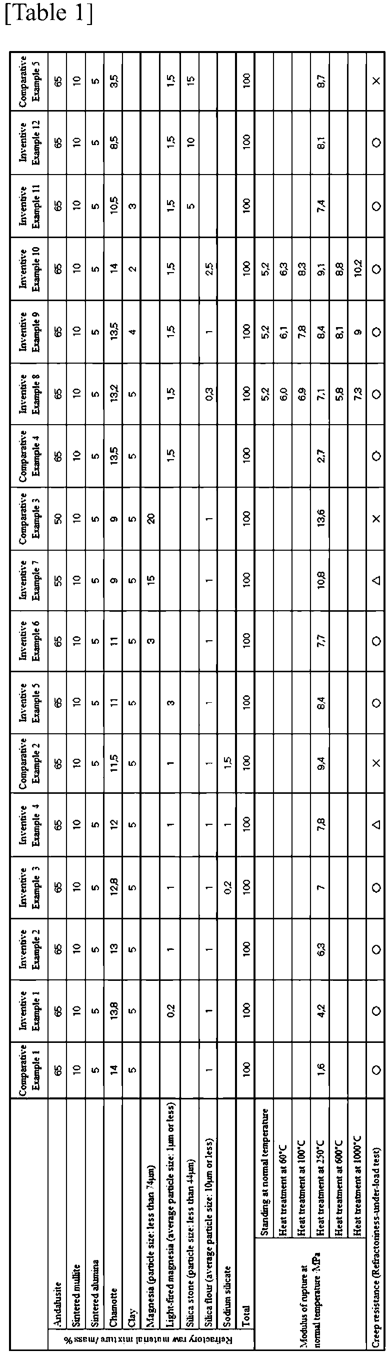

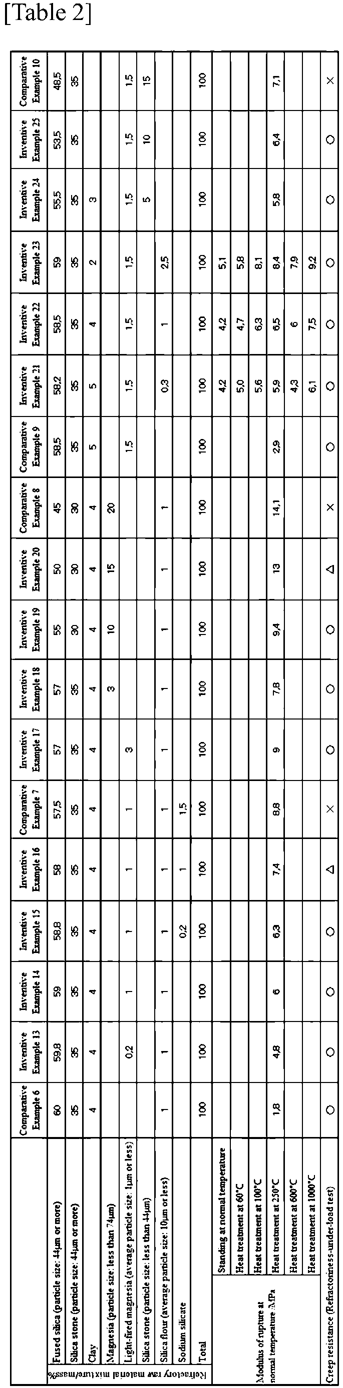

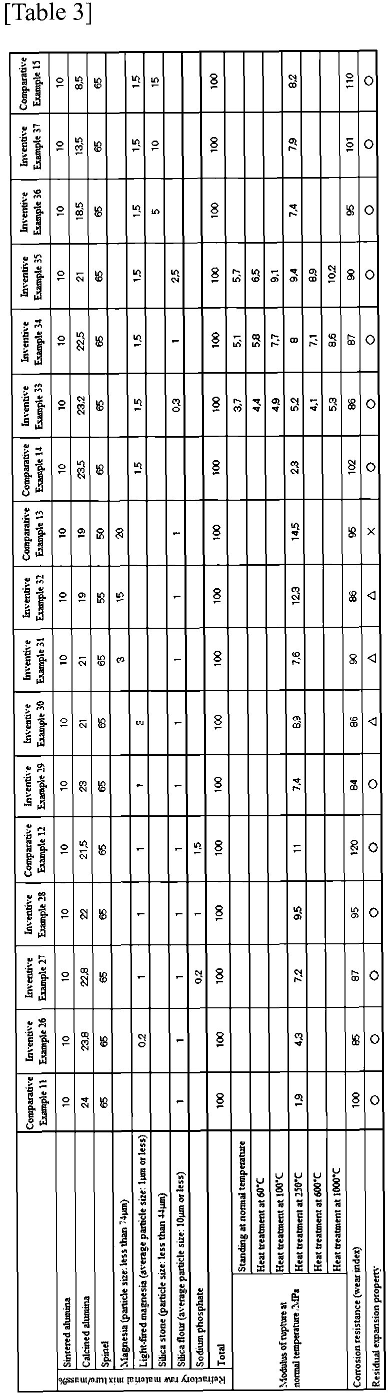

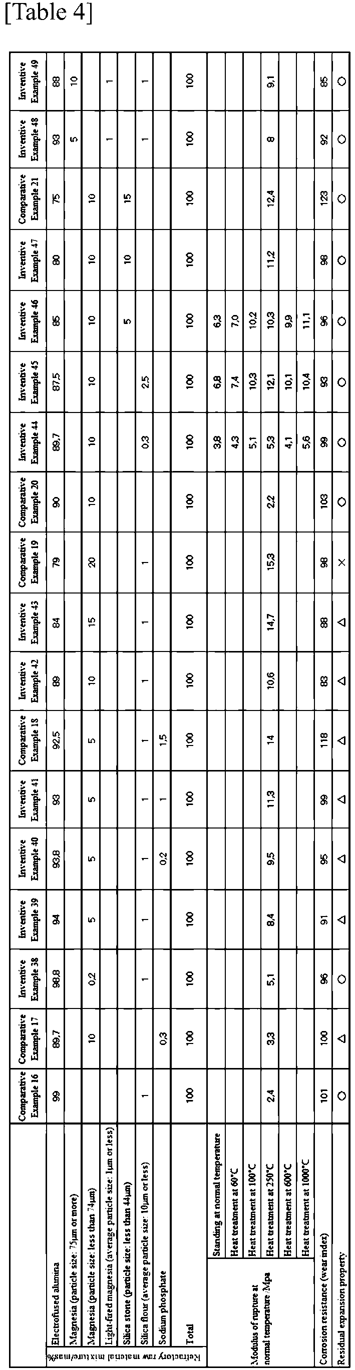

In Table 1, Inventive Examples 1 to 7, which are examples of alumina-silica unfired bricks and in which the content rate of the magnesia fine powder in the refractory raw material mixture is varied within the scope of the present invention, exhibited sufficient strength, and were also excellent in creep resistance. On the other hand, Comparative Example 1, in which no magnesia fine powder is contained, was insufficient in terms of strength after heat treatment. Comparative Example 3, in which the content rate of the magnesia fine powder exceeds the upper limit of the present invention, resulted in poor creep resistance. Further, Comparative Example 2, in which the content rate of sodium silicate exceeds the upper limit of the present invention, resulted in inferior creep resistance as compared with Inventive Examples 3 and 4, in which the content rate of sodium silicate falls within the scope of the present invention.

In Table 1, Inventive Examples 8 to 12, which are examples of alumina-
unfired bricks and in which the content rate of the silica fine powder in the refractory raw material mixture is varied within the scope of the present invention, exhibited sufficient strength, and were also excellent in creep resistance. On the other hand, Comparative Example 4, in which no silica is contained, was insufficient in terms of strength after heat treatment. Comparative Example 5, in which the content rate of the silica fine powder exceeds the upper limit of the present invention, had poor creep resistance. Further, in each of Inventive Examples 8 to 10, heat treatment was performed at different temperatures, and in all cases, sufficient strength was obtained.

In Table 2, Inventive Examples 13 to 20, which are examples of silica-based unfired bricks and in which the content rate of the magnesia fine powder in the refractory raw material mixture is varied within the scope of the present invention, exhibited sufficient strength, and were also excellent in creep resistance. On the other hand, Comparative Example 6, in which no magnesia fine powder is contained, was insufficient in terms of strength after heat treatment. Comparative Example 8, in which the content rate of the magnesia fine powder exceeds the upper limit of the present invention, resulted in poor creep resistance. Further, Comparative Example 7, in which the content rate of sodium silicate exceeds the upper limit of the present invention, resulted in inferior creep resistance as compared with Inventive Examples 15 and 16, in which the content rate of sodium silicate falls within the scope of the present invention.

In Table 2, Inventive Examples 21 to 25, which are examples of silica-based unfired bricks and in which the content rate of the silica fine powder in the refractory raw material mixture is varied within the scope of the present invention, exhibited sufficient strength, and were also excellent in creep resistance. On the other hand, Comparative Example 9, in which no silica fine powder is contained, was insufficient in terms of strength after heat treatment. Comparative Example 10, in which the content rate of the silica fine powder exceeds the upper limit of the present invention, had poor creep resistance. Further, in each of Inventive Examples 21 to 23, heat treatment was performed at different temperatures, and in all cases, sufficient strength was obtained.

In Table 3, Inventive Examples 26 to 32, which are examples of spinel-based unfired bricks and in which the content rate of the magnesia fine powder in the refractory raw material mixture is varied within the scope of the present invention, exhibited sufficient strength, and were also excellent in corrosion resistance and residual expansion property. On the other hand, Comparative Example 11, in which no magnesia is contained, was insufficient in terms of strength after heat treatment. Comparative Example 13, in which the content rate of the magnesia fine powder exceeds the upper limit of the present invention, had excessive residual expansion. Further, Comparative Example 12, in which the content rate of sodium phosphate exceeds the upper limit of the present invention, resulted in inferior corrosion resistance, as compared with Inventive Examples 27 and 28, in which the content rate of sodium phosphate falls within the scope of the present invention.

In Table 3, Inventive Examples 33 to 37, which are examples of spinel-based unfired bricks and in which the content rate of the silica fine powder in the refractory raw material mixture is varied within the scope of the present invention, exhibited sufficient strength, and were also excellent in corrosion resistance and residual expansion property. On the other hand, Comparative Example 14, in which no silica fine powder is contained, was insufficient in terms of strength after heat treatment. Comparative Example 15, in which the content rate of the silica fine powder exceeds the upper limit of the present invention, had poor corrosion resistance. Further, in each of Inventive Examples 33 to 35, heat treatment was performed at different temperatures, and in all cases, sufficient strength was obtained.

In Table 4, Inventive Examples 38 to 43, which are examples of alumina-based unfired bricks and in which the content rate of the magnesia fine powder in the refractory raw material mixture is varied within the scope of the present invention, exhibited sufficient strength, and were also excellent in corrosion resistance and residual expansion property. On the other hand, Comparative Example 16, in which no magnesia fine powder is contained, was insufficient in terms of strength after heat treatment. Comparative Example 19, in which the content rate of the magnesia fine powder exceeds the upper limit of the present invention, had excessive residual expansion. Further, Comparative Example 18, in which the content rate of sodium phosphate exceeds the upper limit of the present invention, had inferior corrosion resistance as compared with Inventive Examples 40 and 41, in which the content rate of sodium phosphate falls within the scope of the present invention. Further, Comparative Example 17, in which no silica fine powder is contained, and sodium phosphate is contained at a rate of 0.3% by mass, was insufficient in terms of strength.

In Table 4, Inventive Examples 44 to 47, which are examples of alumina-based unfired bricks and in which the content rate of silica fine powder in the refractory raw material mixture is varied within the scope of the present invention, exhibited sufficient strength, and were also excellent in corrosion resistance and residual expansion property. On the other hand, Comparative Example 20, in which no silica fine powder is contained, was insufficient in terms of strength after heat treatment. Comparative Example 21, in which the content rate of the silica fine powder exceeds the upper limit of the present invention, resulted in poor corrosion resistance. Further, in each of Inventive Examples 44 to 46, heat treatment was performed at different temperatures, and in all cases, sufficient strength was obtained.

In Table 4, Inventive Examples 48 and 49, which are examples of alumina-based unfired bricks and in which magnesia having a particle size of 75 µm or more is contained in the refractory raw material mixture within the scope of the present invention, had superior residual expansion property as compared with Inventive Examples 39 and 42 in which the content rate of the magnesia raw material is at a comparable level, and were also sufficient in terms of strength and corrosion resistance.

## Claims

1. A method for manufacturing an unfired brick, the method comprising:
adding water to a refractory raw material mixture that contains 0.2% by mass to 15% by mass of magnesia having a particle size of less than 75 µm, and 0.3% by mass to 10% by mass of silica having a particle size of less than 44 µm, with the remainder mainly containing one or more selected from the group consisting of an alumina raw material, an alumina-silica raw material, a silica raw material, and a spinel raw material, wherein a total content rate of alkali metal phosphate and alkali metal silicate is less than 1% by mass (including zero); and
subjecting the resulting mixture to kneading and press-molding, and then to standing at normal temperature or heat treatment at a temperature of 1000°C or less.

2. The method as claimed in claim 1, wherein light-fired magnesia is used as the magnesia having a particle size of less than 75 µm.

3. The method as claimed in claim 1 or 2, wherein silica flour is used as the silica having a particle size of less than 44 µm.

4. A method for manufacturing an unfired brick, the method comprising:
adding water to a refractory raw material mixture that contains 0.2% by mass to 5% by mass of magnesia having a particle size of less than 75 µm, 10% by mass or less (not including zero) of magnesia having a particle size of 75 µm or more, and 0.3% by mass to 10% by mass of silica having a particle size of less than 44 µm, with the remainder mainly containing an alumina raw material, wherein a total content rate of alkali metal phosphate and alkali metal silicate is less than 1% by mass (including zero); and
subjecting the resulting mixture to kneading and press-molding, and then to standing at normal temperature or heat treatment at a temperature of 1000°C or less.

5. The method as claimed in claim 4, wherein light-fired magnesia is used as the magnesia having a particle size of less than 75 µm.

6. The method as claimed in claim 4 or 5, wherein silica flour is used as the silica having a particle size of less than 44 µm.
